# EUROPÄISCHE PATENTANMELDUNG

(11) **EP 2 450 606 A1**
(43) Veröffentlichungstag der Anmeldung: **09.05.2012**
(21) Anmeldenummer: 11187522.5
(22) Anmeldetag: 02.11.2011
(51) Int. Cl.: F16K 11/07

(54) **Hydraulisches Steuerventil mit einem in dessen hohl ausgebildeten Steuerschieber angeordneten Vorsteuerkolben**

(30) Priorität: 05.11.2010 DE 102010050323
(71) Anmelder: Parker Hannifin Manufacturing Germany GmbH & Co. KG, 33659 Bielefeld (DE)
(72) Erfinder: Lehner, Thomas, 53937 Schleiden (DE); Baumanns, Frank, 47877 Willich-Anrath (DE); Vogel, Viktor, 41189 Mönchengladbach (DE); Krips, Walter, 41516 Grevenbroich (DE)
(74) Vertreter: Müller, Karl-Ernst

(57) **Zusammenfassung**

Ein hydraulisches Steuerventil mit einer einen in einem wenigstens vier Anschlüsse P, A, B, T aufweisenden Ventilgehäuse zur Sperrung beziehungsweise Freigabe der Anschlüsse verschiebbaren und mit an Kolbenbunden ausgebildeten Steuerkanten versehenen Steuerschieber aufweisenden Hauptstufe und mit einer für die Steuerung des Steuerschiebers der Hauptstufe vorgesehenen hydraulischen Vorsteuerstufe ist dadurch gekennzeichnet, dass der Steuerschieber (17) der Hauptstufe zur Ausbildung der hydraulischen Vorsteuerstufe hohl ausgebildet und in dem im Steuerschieber (17) ausgebildeten Hohlraum (19) ein von einem externen Antrieb verschiebbarer Vorsteuerkolben (20) beweglich ist, wobei die Wandung des hohlen Steuerschiebers (17) wenigstens ein Fenster (25) aufweist, dem ein an dem Vorsteuerkolben (20) ausgebildeter Kolbenbund (22) mit zwei au-βenseitig angeordneten Steuerkanten (23) zugeordnet ist, und wobei der Vorsteuerkolben (20) mit seinen axialen Enden jeweils eine in das Ventilgehäuse (10) eingesetzte, den Steuerschieber (17) einfassende und einen gehäuseseitig abgeschlossenen stirnseitigen Druckraum (30) für den Steuerschieber (17) schaffende Druckscheibe (26) unter Ausbildung eines definierten konstanten Abströmweges für das in den Ringraum (21) zwischen Steuerschieber (17) und Vorsteuerkolben (20) eingeleitete Hydraulikfluid durchgreift.

## Beschreibung

Die Erfindung betrifft ein hydraulisches Steuerventil mit einer einen in einem wenigstens vier Anschlüsse P, A, B, T aufweisenden Ventilgehäuse zur Sperrung beziehungsweise Freigabe der Anschlüsse verschiebbaren und mit an Kolbenbunden ausgebildeten Steuerkanten versehenen Steuerschieber aufweisenden Hauptstufe und mit einer für die Steuerung des Steuerschiebers der Hauptstufe vorgesehenen hydraulischen Vorsteuerstufe.

Soweit der Steuerschieber eines hydraulischen Steuerventils zur Freigabe beziehungsweise Sperrung der Ventilgehäuseanschlüsse einer Ansteuerung bedarf, sind neben elektro-mechanischen Vorsteuerungen insbesondere auch hydraulisch arbeitende Vorsteuerstufen bekannt, bei denen ein mittels eines zugeordneten Antriebes gesteuerter Vorsteuerkolben einen den Steuerschieber der hydraulischen Hauptstufe beaufschlagenden und damit den Steuerschieber zwischen seinen Steuerstellungen bewegenden Strom an Hydraulikfluid regelt. Bei der Anordnung einer getrennt vom Ventilgehäuse der Hauptstufe angeordneten hydraulischen Vorsteuerstufe ergibt sich ein entsprechend großes Bauvolumen für ein derartiges hydraulisches Steuerventil und damit ein entsprechend großer Platzbedarf.

Der Erfindung liegt daher die Aufgabe zugrunde, ein hydraulisches Steuerventil mit einer hydraulischen Vorsteuerstufe zur Verfügung zu stellen, welches einen geringen Raumbedarf aufweist.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass der Steuerschieber der Hauptstufe zur Ausbildung der hydraulischen Vorsteuerstufe hohl ausgebildet und in dem im Steuerschieber ausgebildeten Hohlraum ein von einem externen Antrieb verschiebbarer Vorsteuerkolben mit einem gegenüber dem Hohlraum kleineren Durchmesser angeordnet und relativ zum Steuerschieber beweglich ist, wobei die Wandung des hohlen Steuerschiebers in ihrem an den Pumpenanschluss P des Steuerventils angeschlossenen Bereich wenigstens ein Fenster aufweist, dem ein an dem Vorsteuerkolben ausgebildeter Kolbenbund mit zwei außenseitig angeordneten Steuerkanten zugeordnet ist, und wobei der Vorsteuerkolben mit seinen axialen Enden jeweils eine in das Ventilgehäuse eingesetzte, den Steuerschieber einfassende und einen gehäuseseitig abgeschlossenen stirnseitigen Druckraum für den Steuerschieber schaffende Druckscheibe unter Ausbildung eines definierten konstanten Abströmweges für das in den Ringraum zwischen Steuerschieber und Vorsteuerkolben eingeleitete Hydraulikfluid durchgreift.

Mit der Erfindung ist zunächst der Vorteil verbunden, dass die Vorsteuerstufe in die Hauptstufe des hydraulischen Steuerventils hineinverlegt und damit der erforderliche Raumbedarf für das Steuerventil insgesamt reduziert ist. Hierzu macht sich die Erfindung in besonderer Weise das hydraulische Prinzip zunutze, dass die Vorsteuerstufe mit dem in beide axiale Richtungen verschiebbaren Vorsteuerkolben mit vier Widerständen, also zwei Widerständen in jeder Bewegungsrichtung des Vorsteuerkolbens, arbeitet, von denen die zulaufseitigen Widerstände in Form der mit dem im Steuerschieber der Hauptstufe ausgebildeten Fenster zusammenwirkenden Steuerkanten des Vorsteuerkolbens steuerbar sind, während die ablaufseitigen Widerstände in Form des Durchtritts des jeweiligen Endes des Vorsteuerkolbens durch die zugeordnete Druckscheibe für ein konstantes Durchflussvolumen an Hydraulikfluid eingerichtet sind. Hiermit ist der Vorteil eines besonders einfachen mechanischen Aufbaus insbesondere der Vorsteuerstufe sowie einer einfachen Fertigung des Steuerventils verbunden.

Der ablaufseitige Widerstand der Vorsteuerstufe ist dabei entsprechend den jeweiligen Einsatzbedingungen für das hydraulische Steuerventil so festzulegen, dass einerseits eine möglichst verlustfreie Verschiebung des Vorsteuerkolbens durch den zugeordneten Antrieb möglich ist, andererseits aber über einen genügend großen Fluiddurchfluss ausreichende Stellgeschwindigkeiten des Steuerventils erzielbar sind.

Nach einem Ausführungsbeispiel der Erfindung kann dabei vorgesehen sein, dass jedes Ende des Vorsteuerkolbens die Druckscheibe in einer in dieser ausgebildeten Durchbrechung durchgreift und der Abströmweg von einem zwischen dem Vorsteuerkolben und der Druckscheibe definiert ausgebildeten Ringspalt gebildet ist, wobei in zweckmäßiger Weise vorgesehen sein kann, dass der Vorsteuerkolben die Durchbrechung der Druckscheibe mit einem an ihm ausgebildeten Ringbund durchgreift und der Ringspalt zwischen der Oberfläche des Ringbundes und der Innenwandung der in der Druckscheibe ausgebildeten Durchbrechung ausgebildet ist.

Um einerseits eine möglichst reibungslose Verschiebung des Vorsteuerkolbens im Inneren des Steuerschiebers und andererseits die Einhaltung des definierten Abstandes zwischen dem Vorsteuerkolben und der Druckscheibe sicherzustellen, kann nach einem Ausführungsbeispiel der Erfindung vorgesehen sein, dass der Vorsteuerkolben über auf seinem Umfang aufgesetzte ringförmige Abstützbunde gegen die Innenwandung des im Steuerschieber ausgebildeten Hohlraums abgestützt und in dem Außenumfang der Abstützbunde wenigstens ein axial verlaufender Einschnitt ausgebildet ist. Durch den im Außenumfang der Abstützbunde angeordneten axialen Einschnitt ist ein Überströmen des Abstützbundes in dem zwischen Steuerschieber und Vorsteuerkolben bestehenden Ringraum ermöglicht. Vorzugsweise können dabei über den Umfang des Ringbundes verteilt in einer symmetrischen Anordnung vier Einschnitte angeordnet sein.

Gemäß einem Ausführungsbeispiel der Erfindung ist vorgesehen, dass über den Umfang des Steuerschiebers verteilt in symmetrischer Anordnung eine Mehrzahl von in den Hohlraum des Steuerschiebers führenden Fenstern angeordnet ist, wobei zumindest zwei einander gegenüberliegende Fenster zweckmäßig sein können.

Hinsichtlich der Ausbildung des die äußeren Steuerkanten ausbildenden Kolbenbundes an dem Vorsteuerkolben kann vorgesehen sein, dass der Vorsteuerkolben mit einem umlaufenden Einstich versehen ist.

Um den für die axiale Verschiebung des Steuerschiebers der Hauptstufe des hydraulischen Steuerventils erforderlichen Druckraum zu schaffen, ist nach einem Ausführungsbeispiel der Erfindung vorgesehen, dass die Druckscheiben eine umlaufende Vertiefung zur Aufnahme eines stirnseitigen axialen Vorsprungs des Steuerschiebers als Anschlag für die Endstellung des Steuerschiebers aufweisen, deren Tiefe so bemessen ist, dass in der Endstellung des Steuerschiebers ein Zwischenraum zwischen der Druckscheibe und der Stirnseite des Steuerschiebers als Druckraum bestehen bleibt.

Zweckmäßigerweise kann vorgesehen sein, dass zwischen dem an dem Steuerschieber ausgebildeten Fenster und den zugeordneten Steuerkanten des Vorsteuerkolbens eine Nullüberdeckung eingerichtet ist.

In der Zeichnung ist ein Ausführungsbeispiel der Erfindung wiedergegeben, welches nachstehend beschrieben ist. Die einzige Figur zeigt ein hydraulisches Steuerventil mit integrierter Vorsteuerstufe im Schnitt ohne Darstellung des zugeordneten Antriebs für die Vorsteuerstufe und sonstige, an einem Steuerventil vorzusehende Sicherheitseinrichtungen, die von der Erfindung nicht berührt sind.

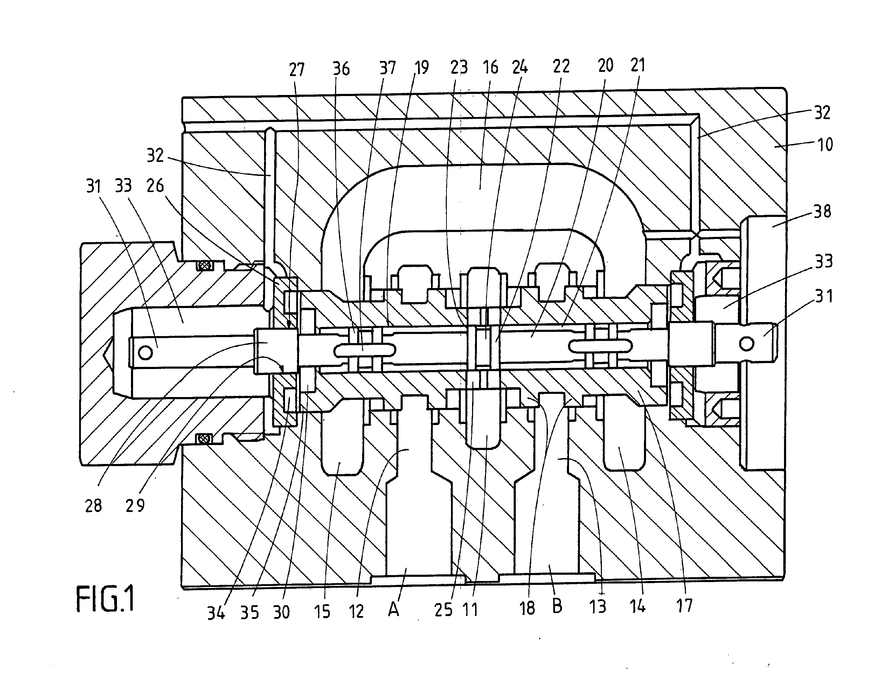

An dem aus Figur 1 ersichtlichen Ventilgehäuse 10 eines hydraulischen Steuerventils sind vier Standardanschlüsse P, A, B, T ausgebildet, wie derartige Anschlüsse geläufig sind, von denen aber in der Zeichnung lediglich die Anschlüsse A und B sichtbar sind. In an sich bekannter Weise sind den Anschlüssen in dem Ventilgehäuse 10 jeweils Ringräume zugeordnet, und zwar ein Ringraum 11 für den Pumpenanschluss P, ein Ringraum 12 für den Verbraucheranschluss A und ein Ringraum 13 für den Verbraucheranschluss B. Weiterhin sind bei dem dargestellten Ausführungsbeispiel jeweils außenliegende Ringräume 14 und 15 angeordnet, die dem Tankanschluss T zugeordnet sind, wobei der Ringraum 14 unmittelbar mit dem Tankanschluss T verbunden sein kann, während der Ringraum 15 über eine interne Brücke 16 mit dem Ringraum 14 und damit mit dem Tankanschluss T verbunden ist.

Im Rahmen der insoweit bekannten Bauart eines Steuerventils ist in dem Ventilgehäuse 10 ein Steuerschieber 17 verschiebbar angeordnet, an welchem zwei Kolbenbunde 18 mit jeweils außenliegenden Steuerkanten angeordnet sind, wobei in der in der Zeichnung dargestellten Neutralstellung des Steuerventils die Kolbenbunde 18 die Ringräume 12 und 13 sperren. Bei einer Verschiebung des Steuerschiebers 17 erfolgt eine Verbindung des Ringraumes 11 entweder mit Ringraum 12 oder 13, wobei entsprechend der andere Ringraum 12 beziehungsweise 13 mit einem der Ringräume 14 beziehungsweise 15 verbunden ist. Auf diese Weise sind die Ringräume 12, 13 der Verbraucheranschlüsse A, B entweder mit dem Pumpendruck beaufschlagt oder mit dem Tankanschluss verbunden.

Zur Ausbildung einer hydraulischen Vorsteuerung ist der Steuerschieber 17 hohl ausgebildet und weist einen inneren Hohlraum 19 auf, in welchem ein Vorsteuerkolben 20 relativ zum Steuerschieber verschiebbar angeordnet ist. Der Vorsteuerkolben 20 weist einen kleineren Durchmesser als der Hohlraum 19 des Steuerschiebers 17 auf, so dass sich ein Ringraum 21 zum Durchfluss eines Hydraulikfluides ergibt.

An dem Vorsteuerkolben 20 ist ein Kolbenbund 22 mit außenliegenden Steuerkanten 23 angeordnet, der mittig einen umlaufenden Einstich 24 zum Druckausgleich aufweist. Der Kolbenbund 22 des Vorsteuerkolbens 20 wirkt mit bei dem dargestellten Ausführungsbeispiel zwei gegenüberliegend angeordneten Fenstern 25 des Steuerschiebers zusammen, die dem mit dem Pumpenanschluss P verbundenen Ringraum 11 zugeordnet sind, so dass das von der Pumpe herangeführte Hydraulikfluid jeweils an den Fenstern 25 des Steuerschiebers 17 ansteht. Erfolgt eine Verschiebung des Vorsteuerkolbens 20 aus der in der Zeichnung dargestellten Neutralposition nach links oder rechts, so gibt die zugeordnete Steuerkante 23 des Kolbenbundes 22 das jeweilige Fenster 25 frei, so dass in Abhängigkeit von der Stellung des Vorsteuerkolbens 20 in dem Hohlraum 19 des Steuerschiebers 17 Hydraulikfluid in den Ringraum 21 einströmt.

Der von dem Steuerschieber 17 durchsetzte und bei seiner Steuerbewegung überstrichene Raum ist durch im Ventilgehäuse 10 gegenüber dem Ventilgehäuse dicht angeordnete Druckscheiben 26 verschlossen. Die beiden Druckscheiben 26 weisen jeweils eine zentrale Durchbrechung 27 auf, durch die das jeweilige Ende 31 des Vorsteuerkolbens 20 hindurchgeführt ist, und zwar unter Ausbildung eines definierten konstanten Abströmweges. Da der Vorsteuerkolben 20 im Bereich der Durchbrechung 27 in der jeweiligen Druckscheibe 26 mit einem Ringbund 28 versehen ist, ist der definierte konstante Abströmweg durch einen konstruktiv festgelegten Ringspalt 29 zwischen dem Ringbund 28 und der Innenwand der in der Druckscheibe 26 ausgebildeten Durchbrechung 27 ausgebildet.

Zwischen der Druckscheibe 26 und dem stirnseitigen Ende des Steuerschiebers 17 ist ein Druckraum 30 ausgebildet, in den der Ringraum 21 mündet. Die Druckscheiben 26 weisen jeweils eine umlaufende Vertiefung 34 auf, die zur Aufnahme eines an der Stirnseite des Steuerschiebers 17 angeordneten, axial vorspringenden Vorsprunges 35 eingerichtet sind. Dabei ist die Tiefe der Vertiefung 34 im Verhältnis zur axialen Erstreckung des Vorsprunges 35 so bemessen, dass in der Endstellung des Steuerschiebers 17, in welcher dessen axialer Vorsprung 35 in die Vertiefung 34 der Druckscheibe 26 eingetreten ist, ein Zwischenraum zwischen der Druckscheiben 26 und der Stirnseite des Steuerschiebers 17 als Druckraum 30 bestehen bleibt.

Auf der dem Steuerschieber abgewandten Seite der Druckscheibe 26 ist in dem Ventilgehäuse 10 jeweils ein Funktionsraum 33 ausgebildet, in welchen das über den Ringspalt 29 abströmende Hydraulikfluid eintritt; an den Funktionsraum ist eine Abfuhrleitung 32 angeschlossen, die zu einem der dem Tankanschluss T zugeordneten Ringräume 14 beziehungsweise 15 führt, so dass das aus dem Funktionsraum abzuleitende Hydraulikfluid zum Tank abströmen kann. In dem Funktionsraum können weitere für das Verständnis der Erfindung nicht erforderliche Sicherheitseinrichtungen wie Rückstellfedern, Messsysteme oder dergleichen angeordnet sein.

Zur Abstützung des Vorsteuerkolbens 20 bei seiner Bewegung in dem Hohlraum 19 des Steuerschiebers 17 ist der Vorsteuerkolben 20 zu beiden Seiten seines Kolbenbundes 22 mit jeweils einem ringförmigen Abstützbund 36 versehen, mittels derer der Vorsteuerkolben 20 bei seinen axialen Bewegungen gegenüber dem Steuerschieber 17 geführt ist. Um einen Durchtritt des Hydraulikfluides über den Bereich der Abstützbunde 36 hinweg zu ermöglichen, sind diese auf ihrem äußeren Umfang mit über den Umfang verteilt angeordneten, axial verlaufenden Einschnitten 37 versehen, über die das in den Ringraum 21 eingetretene Hydraulikfluid überströmen kann.

Bei dem dargestellten Ausführungsbeispiel ist am rechten Ende 31 des Vorsteuerkolbens 20 in dem Ventilgehäuse 10 eine Öffnung 38 für die Ankopplung eines externen, vorzugsweise elektro-mechanischen Antriebes für den Vorsteuerkolben 20 ausgebildet.

Wird der Vorsteuerkolben 20 mittels des nicht dargestellten Antriebes aus der in der Zeichnung dargestellte Neutralstellung beispielsweise nach links verschoben, so gibt die in der Zeichendarstellung rechte Steuerkante 23 des am Vorsteuerkolben 20 ausgebildeten Kolbenbundes 22 die Fenster 25 in den Steuerschieber 17 frei, so dass von der Pumpe gefördertes Hydraulikfluid in den Ringraum 21 nach rechts einströmt und den rechten Abstützbund 36 in dessen axialen Einschnitten 37 passiert und in den an dem Ringraum 21 angeschlossenen Druckraum 30 zwischen der Druckscheibe 26 und dem stirnseitigen Ende des Steuerschiebers 17 strömt. Der hier sich aufbauende Druck führt zu einer Verschiebung des Steuerschiebers 17 ebenfalls nach links, wobei der Steuerschieber 17 den bestehenden Druckraum 30 verkleinert und mit seinem umlaufenden Vorsprung 35 in die Vertiefung 34 der Druckscheibe 26 eintritt. Das notwendigerweise dabei aus dem Druckraum 30 zu verdrängende Hydraulikfluid kann über den Ringspalt 29 in den Funktionsraum 33 und von hier aus über die Abfuhrleitung 32 zum Tank strömen. Soweit auf der Druckseite des Steuerschiebers 17 der Ringspalt 29 ebenfalls offen ist, so dass während des Druckaufbaus im Druckraum 30 Hydraulikfluid abströmt, so wird im Verhältnis zur Abströmmenge soviel Hydraulikfluid in den Druckraum 30 eingeleitet, dass ein ausreichender Druckaufbau erfolgt.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Hydraulisches Steuerventil mit einer einen in einem wenigstens vier Anschlüsse P, A, B, T aufweisenden Ventilgehäuse zur Sperrung beziehungsweise Freigabe der Anschlüsse verschiebbaren und mit an Kolbenbunden ausgebildeten Steuerkanten versehenen Steuerschieber aufweisenden Hauptstufe und mit einer für die Steuerung des Steuerschiebers der Hauptstufe vorgesehenen hydraulischen Vorsteuerstufe, **dadurch gekennzeichnet, dass** der Steuerschieber (17) der Hauptstufe zur Ausbildung der hydraulischen Vorsteuerstufe hohl ausgebildet und in dem im Steuerschieber (17) ausgebildeten Hohlraum (19) ein von einem externen Antrieb verschiebbarer Vorsteuerkolben (20) mit einem gegenüber dem Hohlraum (19) kleineren Durchmesser angeordnet und relativ zum Steuerschieber (17) beweglich ist, wobei die Wandung des hohlen Steuerschiebers (17) in ihrem an den Pumpenanschluss P des Steuerventils angeschlossenen Bereich wenigstens ein Fenster (25) aufweist, dem ein an dem Vorsteuerkolben (20) ausgebildeter Kolbenbund (22) mit zwei außenseitig angeordneten Steuerkanten (23) zugeordnet ist, und wobei der Vorsteuerkolben (20) mit seinen axialen Enden jeweils eine in das Ventilgehäuse (10) eingesetzte, den Steuerschieber (17) einfassende und einen gehäuseseitig abgeschlossenen stirnseitigen Druckraum (30) für den Steuerschieber (17) schaffende Druckscheibe (26) unter Ausbildung eines definierten konstanten Abströmweges für das in den Ringraum (21) zwischen Steuerschieber (17) und Vorsteuerkolben (20) eingeleitete Hydraulikfluid durchgreift.

2. Hydraulisches Steuerventil nach Anspruch 1, **dadurch gekennzeichnet, dass** jedes Ende des Vorsteuerkolbens (20) die Druckscheibe (26) in einer in dieser ausgebildeten Durchbrechung (27) durchgreift und der Abströmweg von einem zwischen dem Vorsteuerkolben (20) und der Druckscheibe (26) definiert ausgebildeten Ringspalt (29) gebildet ist.

3. Hydraulisches Steuerventil nach Anspruch 2, **dadurch gekennzeichnet, dass** der Vorsteuerkolben (20) die Durchbrechung (27) der Druckscheibe (26) mit einem an ihm ausgebildeten Ringbund (28) durchgreift und der Ringspalt (29) zwischen der Oberfläche des Ringbundes (28) und der Innenwandung der in der Druckscheibe (26) ausgebildeten Durchbrechung (27) ausgebildet ist.

4. Hydraulisches Steuerventil nach einem der Ansprüche 1 bis 3, **dadurch gekennzeichnet, dass** der Vorsteuerkolben (20) über auf seinem Umfang aufgesetzte ringförmige Abstützbunde (36) gegen die Innenwandung des im Steuerschieber (17) ausgebildeten Hohlraums (19) abgestützt und in dem Außenumfang der Abstützbunde (36) wenigstens ein axial verlaufender Einschnitt (37) ausgebildet ist.

5. Hydraulisches Steuerventil nach Anspruch 4, **dadurch gekennzeichnet, dass** über den Umfang des Abstützbundes (36) verteilt in einer symmetrischen Anordnung vier Einschnitte (37) angeordnet sind.

6. Hydraulisches Steuerventil nach einem der Ansprüche 1 bis 5, **dadurch gekennzeichnet, dass** über den Umfang des Steuerschiebers (17) verteilt in symmetrischer Anordnung eine Mehrzahl von in den Hohlraum (19) des Steuerschiebers (17) führenden Fenstern (25) angeordnet ist.

7. Hydraulisches Steuerventil nach einem der Ansprüche 1 bis 6, **dadurch gekennzeichnet, dass** der die äußeren Steuerkanten (23) ausbildende Kolbenbund (22) des Vorsteuerkolbens (20) mit einem umlaufenden Einstich (24) versehen ist.

8. Hydraulisches Steuerventil nach einem der Ansprüche 1 bis 7, **dadurch gekennzeichnet, dass** die Druckscheiben (26) eine umlaufende Vertiefung (34) zur Aufnahme eines stirnseitigen axialen Vorsprungs (35) des Steuerschiebers (17) als Anschlag für die Endstellung des Steuerschiebers (17) aufweisen, deren Tiefe so bemessen ist, dass in der Endstellung des Steuerschiebers (17) ein Zwischenraum zwischen der Druckscheibe (26) und der Stirnseite des Steuerschiebers (17) als Druckraum (30) bestehen bleibt.

9. Hydraulisches Steuerventil nach einem der Ansprüche 1 bis 8, **dadurch gekennzeichnet, dass** zwischen dem an dem Steuerschieber (17) ausgebildeten Fenster (25) und den zugeordneten Steuerkanten (23) des Vorsteuerkolbens (20) eine Nullüberdeckung eingerichtet ist.
